# EUROPEAN PATENT APPLICATION

(11) **EP 1 767 796 A1**
(43) Date of publication of application: **28.03.2007**
(21) Application number: 05741564.8
(22) Date of filing: 20.05.2005
(51) Int. Cl.: F16C 11/04, F16C 11/10, G06F 1/16, H04M 1/02, H05K 5/02

(54) **TWO-AXIS HINGE DEVICE**

(30) Priority: 23.06.2004 JP 2004184970
(71) Applicant: SUGATSUNE KOGYO CO., LTD., Chiyoda-ku Tokyo 101-8633 (JP)
(72) Inventor: KOMINE, Yasushi; c/o Intellectual Property Div., 1-chome, Minato-ku, Tokyo;1058001 (JP); TOMIZAWA, Kenji; c/o SUGATSUNE KOGYO CO., LTD.,, Tokyo;1018633 (JP)
(74) Representative: Hallybone, Huw George
(86) International application number: PCT/JP2005/009239
(87) International publication number: WO 2006/001142

(57) **Abstract**

A turning member 43 is turnably disposed at a support cylinder 42 of a hinge main body about a first turning axis L1. A second turning member (not shown) is turnably disposed at the turning member 43 about a second turning axis (not shown) which is orthogonal to said first turning axis L1. A movable member 44 is connected to said turning member 43 such that said movable member 44 is non-turnable but movable. The movable member 44 is biased toward an attachment plate 41 of the hinge main body by a coiled spring 45. A pair of recesses 44c, 44d are formed in the movable member 44. A pair of protrusions 41a, 41b, which are brought into and out of the recesses 44c, 44d thereby the movable member 44 is moved toward the first turning axis L1, are disposed at the attachment plate 41.

## Description

### TECHNICAL FIELD

This invention relates to a biaxial hinge device having two turning axes which form a right angle.

### BACKGROUND ART

In general, a biaxial hinge device comprises a hinge main body, a first turning member turnably disposed at the hinge main body about a first turning axis, and a second turning member turnably disposed at the first turning member about a second turning axis orthogonal to the first turning axis. In case a biaxial hinge device thus constructed is used for a mobile telephone set, the hinge main body is attached to a transmission section of the mobile telephone set and the second turning member is attached to a reception section. As a result, the reception section is turnably connected to the transmission section about the first and second turning axes. Normally, the first turning axis is orthogonal to a front surface of the transmission section and the second turning axis is parallel to a front surface of the transmission section (see Patent Documents 1, 2).
Patent Document 1: Japanese Patent Application Laid-Open No. 2000-54715
Patent Document 2: Japanese Patent Application Laid-Open No. 2003-133764

### DISCLOSURE OF THE INVENTION

### PROBLEM TO BE SOLVED BY THE INVENTION

When, with the transmission section and the reception section located in a folding position where the front surfaces of the transmission section and the reception section are abutted with each other, the reception section is turned from a folding position about the first turning axis, the front surface of the reception section is slid on the front surface of the transmission section. The front surface of the transmission section is provided with various control buttons. Thus, when the reception section is turned from the folding position about the first turning axis, the control button or buttons are accidentally pushed by the front surface of the reception section. As a result, the mobile telephone set is accidentally operated.

### MEANS FOR SOLVING THE PROBLEM

In order to solve the above problem, the present invention provides a biaxial hinge device comprising a hinge main body, a first turning member turnably disposed at the hinge main body about a first turning axis, and a second turning member turnably disposed at the first turning member about a second turning axis which forms a right angle between the first turning axis and itself, characterized in that a movable member is connected to the first turning member such that the movable member is non-turnable but movable in a direction of the first turning axis, and a moving mechanism is disposed between the movable member and the hinge main body such that when the first turning member is turned about the first turning axis in a direction away from a predetermined reference position, the movable member is moved away from the hinge main body along the first turning axis and when the first turning member is turned about the first turning axis toward the reference position, the movable member is moved toward the hinge main body along the first turning axis.
It is preferable that the moving mechanism includes a biasing means for biasing the movable member toward the hinge main body along the first turning axis, a recess disposed at one of the opposing surfaces of the hinge main body and the movable member and a protrusion disposed at the other opposing surface and brought into and out of the recess in accordance with turning motion of the first turning member, the protrusion is brought out of the recess as the first turning member is turned away from the reference position, thereby the movable member is moved away from the hinge main body against biasing force of the biasing means and the protrusion is brought into the recess as the first turning member is turned toward the reference position, thereby the movable member is moved toward the hinge main body by the biasing force of the biasing means.
It is also preferable that two each of the recesses and the protrusions are provided, the two recesses are arranged on a circumference about the first turning axis in such a manner as to be 180 degrees away from each other in a peripheral direction, and two protrusions are arranged on a circumference about the first turning axis in such a manner as to be 180 degrees away from each other in a peripheral direction.

### EFFECT OF THE INVENTION

In case the biaxial hinge device according to the present invention is used, for example, for a mobile telephone set, the hinge main body is attached to the transmission section and the second turning member is attached to the reception section. The hinge main body and the second turning member are attached to the transmission section and the reception section, respectively, so that when the reception section is located in the folding position, the first turning member is located in the reference position. Of course, the first turning axis is orthogonal to the front surface of the transmission section and the second turning axis is parallel to the front surface of the transmission section. The movable member is preliminarily engaged with the reception section.
In the mobile telephone set wherein the transmission section and the reception section are connected to each other through the biaxial hinge device according to the present invention, it is presumed that the reception section is located in the folding position where the front surface of the reception section is in contact with the front surface of the transmission section. When the reception section is turned about the first turning axis such that the reception section is brought away from the folding position, the movable member is moved by the moving mechanism such that the movable member is brought away from the hinge main body. As a result, the reception section engaged with the movable member is turned about the second turning axis such that the reception section is brought away from the transmission section. That is, the reception section begins to turn about the second turning axis in such a manner as to be brought away from the transmission section at the same time the reception section begins to turn from the folding position about the first turning axis. Thus, the reception section is never slid on the front surface of the transmission section. Contrary, when the reception section is turned toward the folding position about the first turning axis, the movable member is moved toward the hinge main body by the moving mechanism. As a result, the reception section engaged with the movable member is turned toward the transmission section about the second turning axis. When the reception section is turned to the folding position about the first turning axis, the front surface of the reception section is abutted with the front surface of the transmission section. In other words, when the reception section is turned toward the folding position, the front surface of the reception section is never contacted with the front surface of the transmission section until the reception section reaches the folding position. As discussed, the reception section is never turned about the first turning axis with the front surface of the reception section contacted with the front surface of the transmission section. Thus, it can be prevented that the control buttons disposed at the front surface of the transmission section are accidentally pushed by the reception section.

### BRIEF DESCRIPTION OF DRAWINGS

FIG. 1 show a mobile telephone set employing a hinge device according to the present invention in which a reception section is located in a folding position, FIG. 1(A) is a plan view thereof, FIGS. 1(B), 1(C) and 1(D) show views as indicated respectively by arrows B, C, D of FIG. 1(A).
FIG. 2 is a perspective view of the above mobile telephone set.
FIG. 3 is a perspective view of the above mobile telephone set in which the reception section is turned to a first terminal end position.
FIG. 4 is a perspective view of the above mobile telephone set in which the reception section is turned to a second terminal end position.
FIG. 5 is a perspective view showing the above mobile telephone set in which the reception section is turned to a talking position.
FIG. 6 is a perspective view showing the above mobile telephone set in which the reception section is turned to a reverse folding position.
FIG. 7 is a perspective view showing the above mobile telephone set in which the reception section is turned to a first displacement position.
FIG. 8 is a plan view showing the above mobile telephone set in which the reception section is turned to the first displacement position.
FIG. 9 is an enlarged sectional view taken on line A-A of FIG. 8.
FIG. 10 is an exploded perspective view of the above mobile telephone set.
FIG. 11 is an enlarged sectional view taken on line E-E of FIG. 1.
FIG. 12 is an enlarged sectional view taken on line G-G of FIG. 1.
FIG. 13 is an enlarged sectional view taken on line F-F of FIG. 1.
FIG. 14 is an enlarged sectional view taken on line H-H of FIG. 1.
FIG. 15 is a sectional view like FIG. 12 in which the reception section is turned to the reverse folding position.
FIG. 16 is a plan view showing an embodiment of a hinge device according to the present invention.
FIG. 17 is a view when viewed in a direction as indicated by an arrow A of FIG. 16.
FIG. 18 is a view when viewed in a direction as indicated by an arrow B of FIG. 16.
FIG. 19 is a view when viewed in a direction as indicated by an arrow C of FIG. 16.
FIG. 20 is a lower surface view of the above hinge device.
FIG. 21 is a perspective view of the above hinge device.
FIG. 22 is an enlarged sectional view taken on line D-D of FIG. 16.
FIG. 23 is an enlarged sectional view taken on line E-E of FIG. 16.
FIG. 24 is an exploded perspective view of the above hinge device.
FIG. 25 is a partly omitted plan view of a movable member used in the above hinge device.
FIG. 26 is a partly omitted enlarged sectional view taken on line X-X of FIG. 25.
FIG. 27 is a plan view of the movable member used in the above hinge device.
FIG. 28 is a plan view of a turning plate used in the above hinge device.
FIG. 29 is a development view showing a relation between a spherical body disposed at the movable member and first, second and third recesses formed in a turning member.

### DESCRIPTION OF REFERENCE NUMERAL

- L1: first turning axis
- L2: second turning axis
- 4: hinge device
- 6: moving mechanism
- 8: second moving mechanism
- 41: attachment plate (hinge main body)
- 41a: protrusion
- 41b: protrusion
- 42: support cylinder (hinge main body)
- 43: turning member
- 44: movable member
- 44c: recess
- 44d: recess
- 47: first connecting arm (second turning member)
- 51: second connecting arm (second turning member)

### BEST MODE FOR CARRYING OUT THE INVENTION

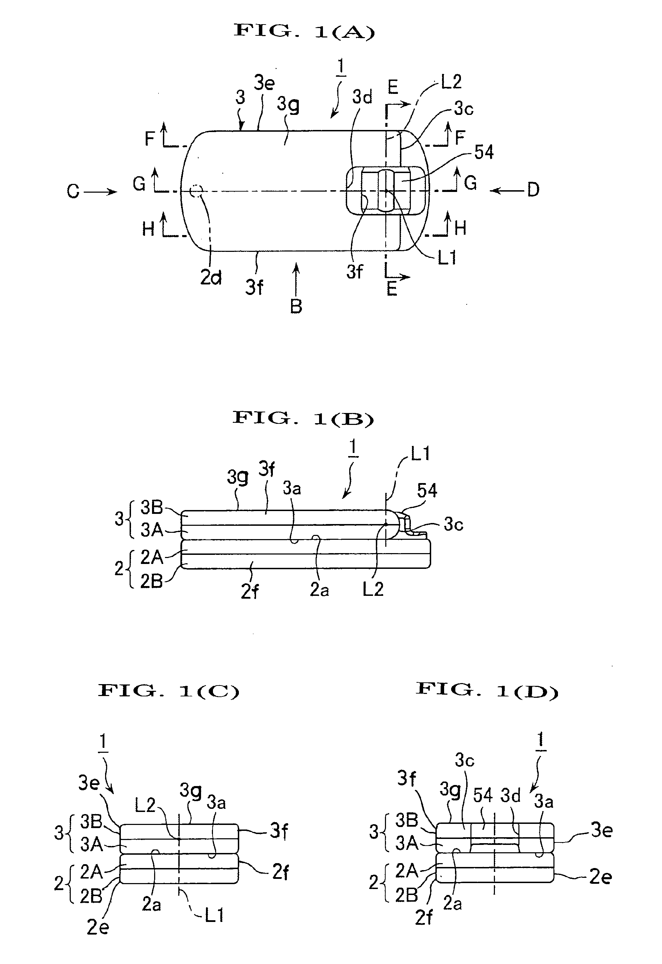

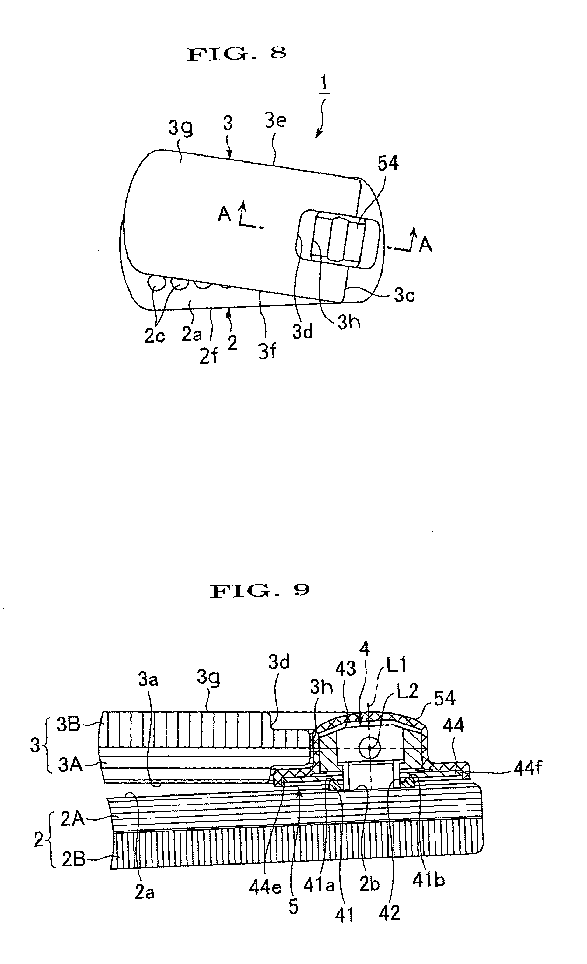

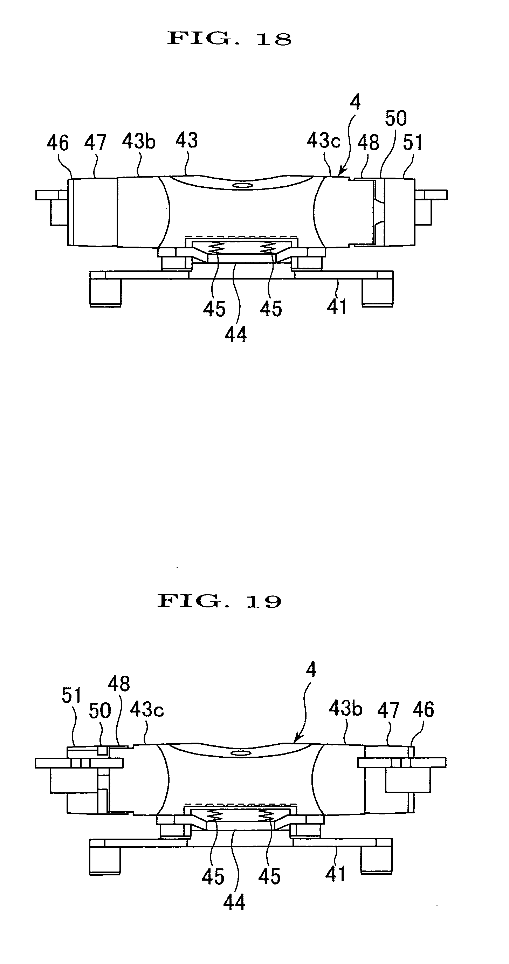

The best mode for carrying out the present invention will be described hereinafter with reference to FIGS. 1 through 29 of the accompanying drawings. FIGS. 1 through 15 show a mobile telephone set 1 in which a biaxial hinge device 4 according to the present invention is used. This mobile telephone set 1 includes a transmission section 2, a reception section 3, and a hinge device 4 (see FIGS. 9 through 15).

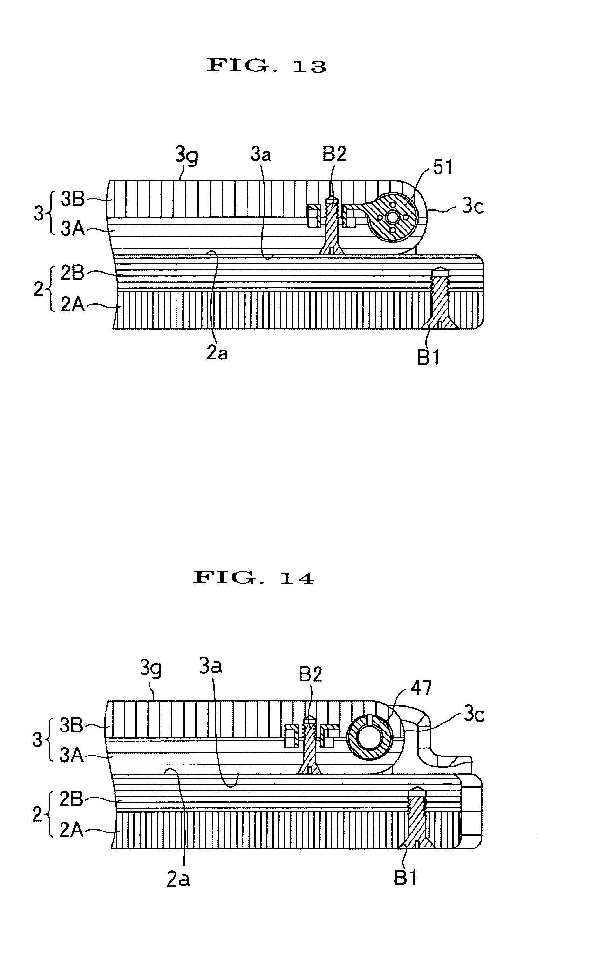

The transmission section 2, as shown in FIG. 1 and FIGS. 9 through 15, comprises two half-bodies 2A, 2B. The two half-bodies 2A, 2B are each in the shape of a rectangular parallelepipe having a small thickness, and they are overlapped in the thickness direction and fixed to each other through a machine screw B1 (see FIGS. 13 and 14). A front surface 2a of the transmission section 2 is a flat surface having a generally rectangular shape in a plan view. An attachment recess 2b extending in the width direction of the front surface 2a and having a small depth is formed in one end in the longitudinal direction of the front surface 2a. An attachment plate (hinge main body) 41, as later described, of the hinge device 4 is attached to a bottom surface of the attachment recess 2b,. Various control buttons 2c, a microphone (not shown) and others are arranged at an area on the other end side from the attachment recess 2b of the front surface 2a.

The reception section 3 also comprises two half-bodies 3A, 3B each in the shape of a rectangular parallelepipe having a small thickness. The two half bodies 3A, 3B are overlapped in the thickness direction and fixed to each other by a machine screw B2 (see FIG. 13). The width of the reception section 3 is generally equal to the width of the transmission section 2, and the length of the reception section 3 is slightly shorter than the length of the transmission section 2. A front surface 3a of the reception section 3 is a flat surface having a generally rectangular shape in a plan view. The front surface 3a is provided with a liquid crystal display 3b, a speaker (not shown) and others. A semi-circular arcuate surface 3c in section extending from widthwise one side of the reception section 3 to the other side is formed in one end surface in the longitudinal direction of the reception section 3. The one end of the reception section 3, where the arcuate surface 3c is formed, is provided at a widthwise central part thereof with a receiving recess 3d. A part protruding from the attachment recess 2b of the hinge device 4 attached to the transmission section 2 is received in the receiving recess 3d.

The transmission section 2 and the reception section 3 are turnably connected to each other about a first turning axis L1 and a second turning axis L2 by the hinge device 4. The first turning axis L1 is orthogonal to the front surface 2a at a widthwise central part of one end part in the longitudinal direction of the front surface 2a, while the second turning axis L2 is extended in parallel to the front surface 2a toward the widthwise direction of the front surface 2a. Moreover, the second turning axis L2 is orthogonal to the first turning axis L1. The second turning axis L2 may be arranged away from the first turning axis L1 toward one or the other end in the longitudinal direction of the front surface 2a. An angle formed between the first turning axis L1 and the second turning axis L2, in any case, is preferably a right angle but it may be deviated, if slightly, from the right angle.

A center line of the arcuate surface 3c of the reception section 3 is aligned with the second turning axis L2. Moreover, a radius of curvature of the arcuate surface 3c set to be generally equal to or slightly smaller than an interval between the second turning axis L2 and the front surface 2a. Accordingly, even when the reception section 3 is in a state where it has turned to any position about the first turning axis L1, the reception section 3 is turnable about the second turning axis L2.

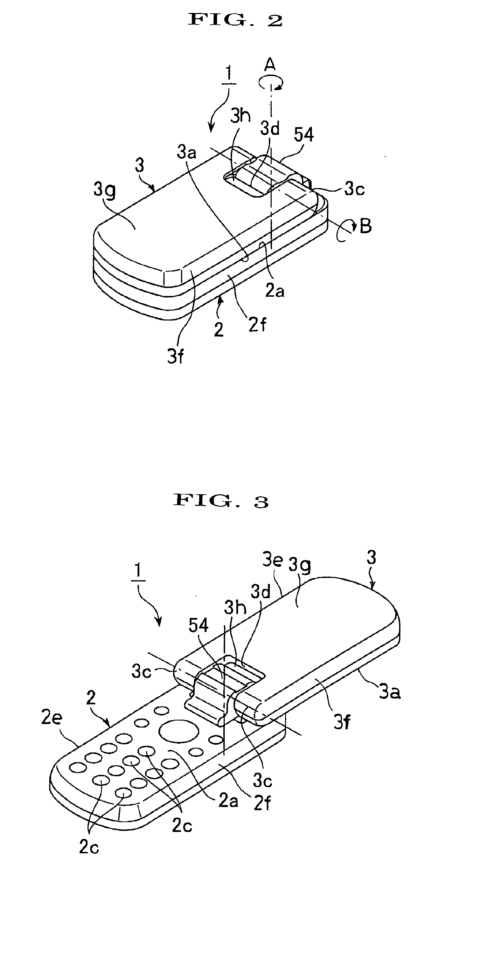

The turning ranges of the transmission section 2 and the reception section 3 about the first and second turning axes L1, L2 will now be described. For the sake of convenience of the description, it is presumed that the transmission section 2 is positionally fixed and the reception section 3 is turnable with respect to the transmission section 2. It is presumed that the reception section 3 is currently located in the folding position shown in FIGS. 1 and 2. Hereinafter, the turning position of the reception section 3 about the first turning axis L1 at this time is referred to as the "first starting end position" and the turning position about the second turning axis L2, as "the second starting end position", respectively. Accordingly, when the reception section 3 is turned to the first starting end position about the first turning axis L1 and turned to the second starting end position about the second turning position L2, the reception section 3 is located at the folding position. When the reception section 3 is located at the first starting end position, both side surfaces 3e, 3f in the direction of the second turning axis L2 of the reception section 3 are located on the same plane as the both side surfaces 2e, 2f in the same direction of the transmission section 2, respectively and the entire front surface 3a of the reception section 3 is opposed to the front surface 2a of the transmission section 2 in the direction of the first turning axis L1. When the reception section 3 is located at the second starting end position, the front surface 3a of the reception section 3 is abutted with the front surface 2a of the transmission section 2. In other words, abutment of the front surface 3a with the front surface 2a restricts the second starting end position of the reception section 3. It is also accepted that a small protrusion 2d, as shown in FIG. 1(A), is formed on a widthwise central part of the other end of the front surface 2a and the front surface 3a of the reception section 3 is abutted with the small protrusion 2d so that the second starting end position is restricted. The second starting end position may be restricted by the hinge device 4. In that case, when the reception section 3 is brought to the second starting end position, the front surface 3a may be slightly spaced apart from the front surface 2a while keeping the front surface 3a to be parallel with the front surface 2a. In any case, when the reception section 3 is located at the second starting end position, the front surface 3a of the reception section 3 is located on a generally same plane as the front surface 2a of the transmission section 2.

The reception section 3 is turnable 180 degrees in a clockwise direction (direction as indicated by the arrow A of FIG. 2) of FIG. 1(A) from the first starting end position with respect to the first turning axis L1. Accordingly, if the position 180 degrees away from the first starting end position in the clockwise direction of FIG. 1(A) is referred to as the first terminal end position, the reception section 3 is turnable between the first starting end position and the first terminal end position about the first turning axis L1. The turning range about the first turning axis L1 of the reception section 3 is restricted by the hinge device 4, as later described. Moreover, when the reception section 3 is located at the first starting end position and the first terminal end position, the reception section 3 is held in the first starting end position and the first terminal end position with a clicking feel, i.e., with a predetermined force, by the hinge device 4. The turning range about the first turning axis L1 of the reception section 3 is not limited to 180 degrees but it can be changed, where necessary. It is, for example, also accepted that the reception section 3 is not only turnable between the first starting end position and the first terminal end position but also further turnable, for example, 90 degrees in the counterclockwise direction of FIG. 1(A) from the first starting end position. It is also an interesting alternative that the reception section 3 is turnable 360 degrees about the first turning axis L1.

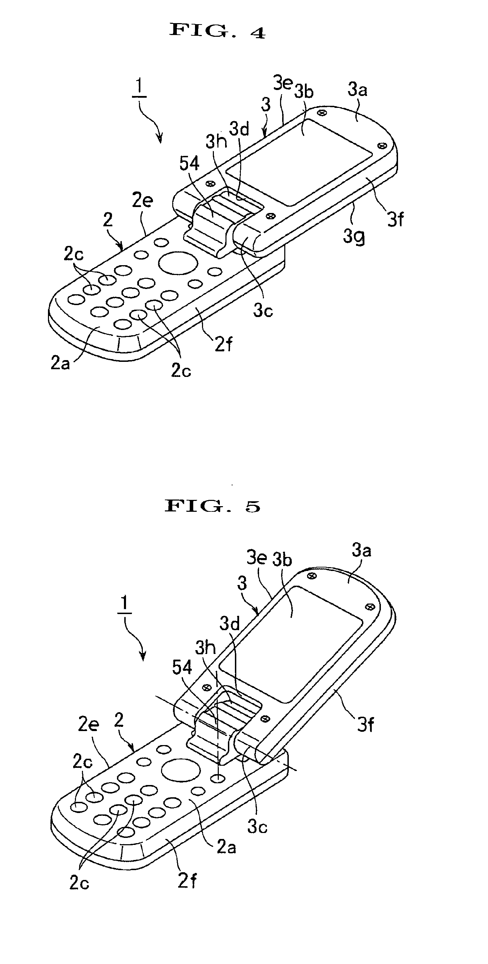

The reception section 3 is turnable 180 degrees in the clockwise direction of FIG. 1(B) from the second starting end position with respect to the second turning axis L2. The second starting end position of the reception section 3 is, as mentioned above, restricted by abutment of the front surface 3a with the front surface 2a of the transmission section 2. If the position reached when the reception section 3 is turned 180 degrees from the second starting end position is referred to as the second terminal end position, the second terminal end position is, as shown in FIG. 4, restricted by abutment of a back surface 3g of the reception section 3 with the front surface 2a of the transmission section 2. The second terminal end position may also be restricted by the hinge device 4. In that case, it is also accepted that when the reception section 3 is brought to the second terminal end position, the back surface 3g is slightly spaced apart from the front surface 2a while keeping the back surface 3g to be parallel with the front surface 2a. In any case, when the reception section 3 is located at the second terminal end position, the back surface 3g of the reception section 3 is located on the generally same plane as the front surface 2a of the transmission section 2. Between the second starting end position and a position away by a predetermined angle (for example, 15 degrees) to the second terminal end position from the second starting end position, the reception section 3 is turn biased toward the second starting end position from the second terminal end position by the hinge device 4. By this turn biasing force, the reception section 3 is turned to the second starting end position and held in the second starting end position. On the other hand, between the second terminal end position and a position away by a predetermined angle (for example, 15 degrees) to the second starting end position from the second terminal end position, the reception section 3 is turn biased toward the second terminal end position from the second starting end position by the hinge device 4. By this turn biasing force, the reception section 3 is turn biased to the second terminal end position and held in the second terminal end position. When the reception section 3 is turned to a talking position shown in FIG. 5, away by a predetermined angle (for example, 160 degrees) to the second terminal end position from the second starting end position about the second turning axis L2, the reception section 3 is stopped at the talking position with a clicking feel, i.e., with a predetermined force.

As discussed, since the reception section 3 is turnable 180 degrees about the first turning axis L1 and turnable 180 degrees about the second turning axis L2, the reception section 3 is turnable to the folding positions (where the turning angles from the first and second starting end closed positions about the first and second turning axes L1, L2 are zero, hereinafter they are referred to as 0 degrees, 0 degrees) shown in FIGS. 1 and 2, a self-photographing position (180 degrees, 0 degree) shown in FIG. 3, an open position (0 degree, 180 degrees) shown in FIG. 4, a talking position (0 degree, 160 degrees) shown in FIG. 5, a reverse folding position (180 degrees, 180 degrees) shown in FIG. 5 and other various positions. In the reverse folding position, the side surfaces 3e, 3f of the reception section 3 are located on the same plane as the side surfaces 2f, 2e of the transmission section 2, respectively.

When the reception section 3, which is located at the folding position shown in FIGS. 1 and 2, begins to turn toward the first terminal end position from the first starting end position about the first turning axis, the reception section 3 is simultaneously forcibly turned toward the second terminal end position from the second starting end position about the second turning axis L2 by a first turn displacing mechanism 5 disposed between the reception section 3 and the biaxial hinge device 4. In this case, during the time the reception section 3 is turned from the first starting end position to a first displacing position away by a predetermined angle (for example, 10 degrees) toward the first terminal end position from the first starting end position, the reception section 3 is turned from the second starting end position to a first releasing position away by a predetermined angle (for example, 5 degrees) toward the second terminal end position from the second starting end position about the second turning axis L2. As a result, the front surface 3a of the reception section 3 is brought away from the front surface 2a of the transmission section 2 at the same time the reception section 3 is turned toward the first terminal end position from the folding position (first starting end position) about the first turning axis L1. Accordingly, the front surface 3a of the reception section 3 is never contacted with the control buttons 2c disposed at the front surface 2a of the transmission section 2. Thus, accidental operation of the mobile telephone set 1 can be prevented from occurrence. Also, at the time the reception section 3 is turned to the folding position from the first displacing position about the first turning axis L1, the reception section 3 is turned to the folding position from the first releasing position about the second turning axis L2 by the first turn displacing mechanism 5 and therefore, the front surface 3a of the reception section 3 is never contacted with the front surface 2a of the transmission section 2 until the reception section 3 is turned to the folding position. Accordingly, at that time, the front surface 3a of the reception section 3 is never contacted with the control buttons 2c of the transmission section 2, either and the accidental operation of the mobile telephone set 1 can be prevented from occurrence. The angle (5 degrees) between the second starting end position and the first releasing position is set to be smaller than the above-mentioned angle range (15 degrees) which enables the biaxial hinge device 4 to turn bias the reception section 3 to the second starting end position from the second terminal end position about the second turning axis L2.

When the reception section 3 located at the self-photographing position shown in FIG. 3 is turned from the first terminal end position to the second displacing position away by a predetermined angle toward the first starting end position from the first terminal end position about the first turning axis L1, the reception section 3 is turned from the second starting end position to the second releasing position away by a predetermined angle from the second starting end position about the second turning axis L2 by the first turn displacing mechanism 5. Contrarily, when the reception section 3 is turned to the first terminal end position from the second displacing position, the reception section 3 is forcibly turned to the second starting end position from the second releasing position by the first turn displacing mechanism 5. The angle between the first terminal end position and the second displacing position is set to be equal to the angle (10 degrees) between the first starting end position and the first displacing position, and the first releasing position and the second releasing position are set to the same position. When the reception section 3 is turned between the first displacing position and the second displacing position about the first turning axis L1, the reception section 3 is held at the first releasing position (which is equal to the second releasing position) by the biaxial hinge device 4.

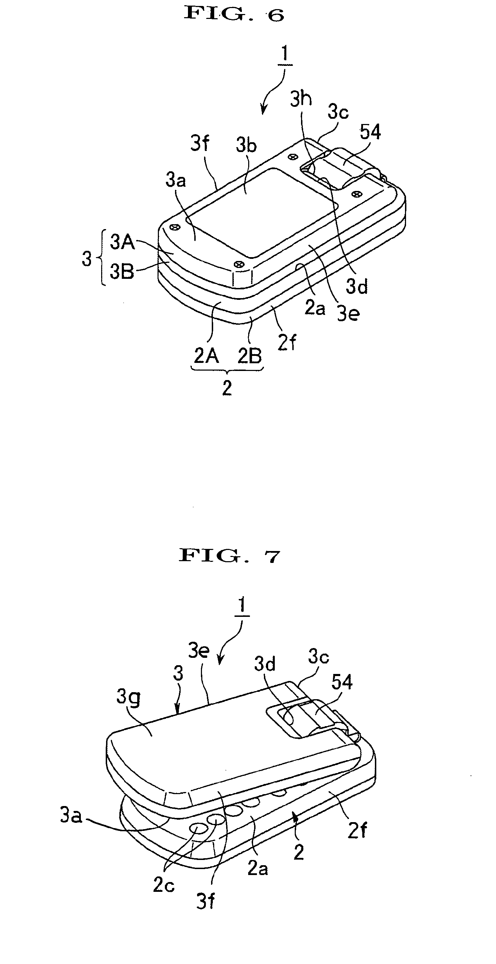

When the reception section 3 located at the reverse folding position shown in FIG. 6 begins to turn toward the first starting end position from the first terminal end position about the first turning axis L1, the reception section 3 is forcibly turned, simultaneously therewith, toward the second starting end position from the second terminal end position about the second turning axis L2 by a second turn displacing mechanism 7 which is disposed between the reception section 3 and the hinge device 4. In that case, during the time the reception section 3 is turned from the first terminal end position to a third displacing position away by a predetermined angle (for example, 10 degrees) toward the first staring end position from the first terminal end position about the first turning axis L1, the reception section 3 is turned from the second terminal end position to a third releasing position away by a predetermined angle (for example, 5 degrees) toward the second starting end position from the second terminal end position about the second turning axis L2. As a result, the back surface 3g of the reception section 3 is brought away from the front surface 2a of the transmission section 2 at the same time the reception section 3 begins to turn toward the first starting end position from the reverse folding position (first terminal end position) about the first turning axis L1. Accordingly, the back surface 3g of the reception section 3 is never contacted with the control buttons 2c which are disposed at the front surface 2a of the reception section 2. Thus, accidental operation of the mobile telephone set 1 can be prevented from occurrence. Moreover, at the time the reception section 3 is turned to the first terminal end position from the third displacing position about the first turning axis L1, the reception section 3 is turned to the reverse folding position from the third releasing position about the second turning axis L2 by the second turn displacing mechanism 7 and the back surface 3g of the reception section 3 is never contacted with the front surface 2a of the transmission section 2 until the reception section 3 is turned to the reverse folding position. Accordingly, the back surface 3g of the reception section 3 is never contacted with the control buttons 2c of the transmission section 2 at that time, either and accidental operation of the mobile telephone 1 can be prevented from occurrence. The angle (5 degrees) between the second terminal end position and the third releasing position is set to be smaller than the angle range (15 degrees) which allows the biaxial hinge device 4 to turn the reception section 3 to the second terminal end position from the second starting end position about the second turning axis L2.

When the reception section 3 located at the open position shown in FIG. 4 is turned from the first starting end position to a fourth displacing position away by a predetermined angle toward the first terminal end position from the first starting end position about the first turning axis L1, the reception section 3 is forcibly turned from the second terminal end position to a fourth releasing position away by a predetermined angle from the second terminal end position about the second turning axis L2 by the second turn displacing mechanism 7. Contrarily, when the reception section 3 is turned to the first starting end position from the fourth displacing position, the reception section is forcibly turned to the second terminal end position from the fourth releasing position by the second turn displacing mechanism 7. The angle between the first starting end position and the fourth displacing position is set to be equal to the angle (10 degrees) between the first terminal end position and the third displacing position, and those two angles are set to be equal to the angle between the first starting end position and the first displacing position and to the angle between the first terminal end position and the second displacing position. The fourth releasing position is set to be equal to the same position as the third releasing position, and the angle between the second terminal end position and the third releasing position and the angle between the second terminal end position and the fourth releasing position are set to be equal to the angle between the second starting end position and the first releasing position and the angle between the second starting end position and the second releasing position. During the time the reception section 3 is turned between the third displacing position and the fourth displacing position about the first turning axis L1, the reception section 3 is held at the third releasing position (which is equal to fourth releasing position) by the biaxial hinge device 4.

Next, the biaxial hinge device 4 for turnably connecting the reception section 3 to the transmission section 2 about the first and second turning axes L1, L2 and the first and second turn displacing mechanisms 5, 7 disposed between the biaxial hinge device 4 and the reception section 3 will be described.

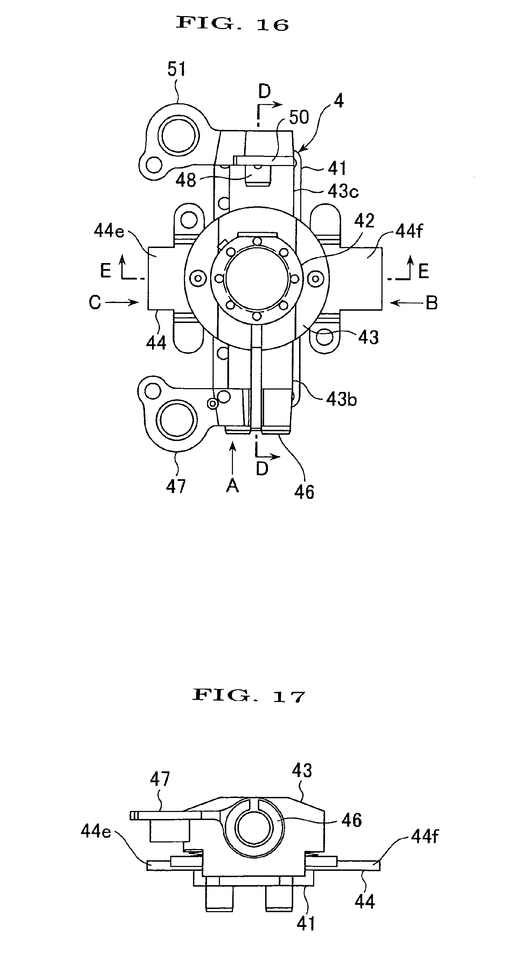

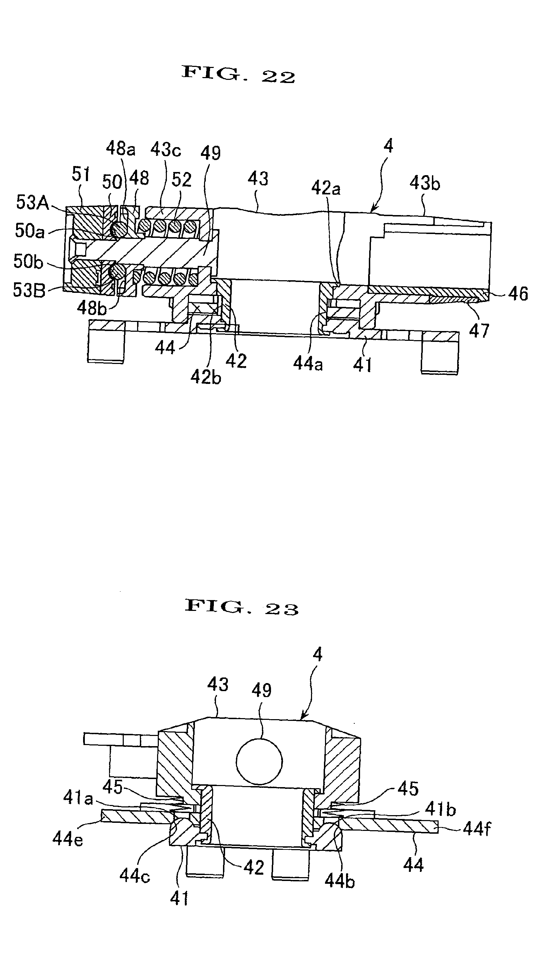

As shown in FIGS. 16 through 24, the hinge device 4 includes an attachment plate 41. One end (lower end in FIGS. 22 and 23) of a support cylinder 42 having a cylindrical configuration is fixed to a central part of this attachment plate 41. A hinge main body of the hinge device 4 is constituted by the attachment plate 41 and the support cylinder 42. Accordingly, the attachment plate 41 and the support cylinder 42 may integrally be formed. That is, the entire hinge main body may integrally be formed.

One end (lower end in FIG. 22) of a turning member (first turning member) 43 having a cylindrical configuration is fitted to an outer peripheral surface of the other end (upper end in FIG. 22) of the support cylinder 42 such that the turning member 43 is turnable about the axis (first turning axis L1) of the support cylinder 42 and movable in the axial direction of the support cylinder 42. It should be noted, however, that the turning member 43 is pressed against a flange part 42a of the support cylinder 42 by a coiled spring 45 as later described and is never substantially moved in the axial direction of the support cylinder 42. A pair of guide grooves 43a are formed in one end surface of the turning member 43 in such a manner as to be 180 degrees away from each other in the peripheral direction.

A movable member 44 is provided with a fitting hole 44a formed in a central part of the movable member 44. A part of the support cylinder 42 located between the turning member 43 and the attachment plate 41 is fitted in the fitting hole 44a such that the movable member 44 is turnable and movable in the axial direction of the support cylinder 42. The movable member 44 has a generally rectangular configuration and arranged such that its longitudinal direction is oriented perpendicular to the axis of the support cylinder 42 and the axes (second turning axis L2) of protruding cylindrical parts 43b, 43c as later described. One end 44e and the other end 44f in the longitudinal direction of the movable member 44 are slidably but non-turnably passed through the pair of guide grooves 43a, 43a of the turning member 43, respectively. Owing to this arrangement, the movable member 44 is connected to the turning member 43 in such a manner as to be non-turnable but movable in the axial direction of the support cylinder 42. One end 44e and the other end 44f of the movable member 44 are passed through the guide grooves 43a, 43a and protruded outward from the turning member 43.

A turn restricting protrusion 44b is formed on an inner peripheral surface of the fitting hole 44a of the movable member 44. The turn restricting protrusion 44b is inserted in a notch part 42b formed in a peripheral wall of the support cylinder 42 in such a manner as to be movable in the peripheral direction of the support cylinder 42. When the turning member 43 and the movable member 44 are turned about the axis of the support cylinder 42, the turn restricting protrusion 44b is abutted with one and the other side surfaces of the notch part 42b in the peripheral direction of the support cylinder 42. By this, the turning member 43 and the movable member 44 are limited in turning range.

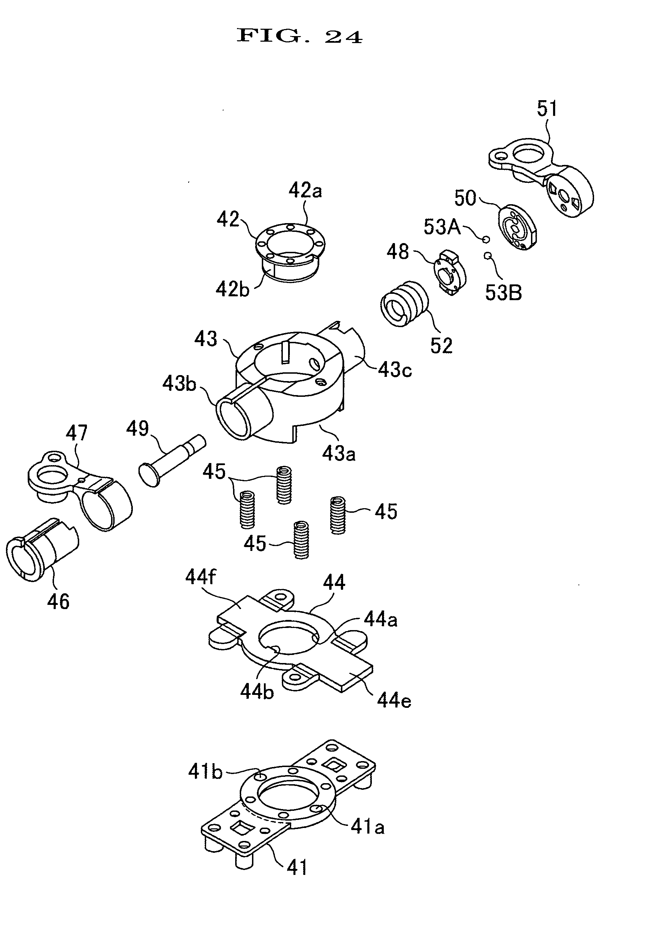

As shown in FIGS. 23 and 24, a coiled spring (biasing means) 45 is disposed between the turning member 43 and the movable member 44. This coiled spring 45 presses the turning member 43 against the flange part 42a of the support cylinder 42 so that the turning member 43 is fixed in position and biases the movable member 44 toward the attachment plate 41 so that opposing surfaces of the movable member 44 and the attachment plate 41 are abutted with each other.

A pair of protrusions 41a, 41b are formed on the opposing surface of the attachment plate 41 to the movable member 44. Accordingly, actually, only the pair of protrusions 41a, 41b of the attachment plate 41 are abutted with the movable member 44. The pair of protrusions 41a, 41b are arranged on a circumference about the axis of the support cylinder 42 in such a manner as to be 180 degrees away from each other in the peripheral direction. The pair of protrusions 41a, 41b may be constituted by a part of a spherical body. That is, it is also accepted that a pair of spherical bodies are embedded in the opposing surface of the attachment plate 41 such that the pair of spherical bodies are partly protruded from the opposing surface of the attachment plate 41 and those parts of the spherical bodies protruded from the attachment plate 41 serve as the protrusions 41a, 41b, respectively.

As shown in FIGS. 23 through 26, a pair of recesses 44c, 44d are formed in the opposing surface of the movable member 44 to the attachment plate 41. The pair of recesses 44c, 44d are arranged on the same circumference as the circumference on which the protrusions 41a, 41b are arranged, in such a manner as to be 180 degrees away from each other in the peripheral direction. Accordingly, when the movable member 44 and the turning member 43 are turned to the predetermined position, the protrusions 41a, 41b are fitted into the recesses 44c, 44d, respectively. In that state, the movable member 44 and the turning member 43 are fixed to the attachment plate 41 by the biasing force of the coiled spring 45 with a predetermined clicking feel. The position of the movable member 44 and the turning member 43 at that time is hereinafter referred to as the first turn starting end position (reference position). When the movable member 44 and the turning member 43 are turned 180 degrees from the first turn starting end position about the axis (first turning axis L1) of the support cylinder 42, the protrusions 41a, 41b are fitted to the recesses 44d, 44c, respectively. The position of the movable member 44 and the turning member 43 at that time is hereinafter referred to as the first turn terminal end position. Also in that position, the movable member 44 and the turning member 43 are fixed to the attachment plate 41 by the biasing force of the coiled spring 45 with a clicking feel.

The first turn starting end position and the first turn terminal end position are set to generally same positions as one and the other limit positions of the turning range of the movable member 44 and the turning member 43 which are limited by the turn restricting protrusion 44b and the notch part 42b, respectively. Accordingly, the turning range of the movable member 44 and the turning member 43 is substantially limited between the first turn starting end position and the first turn terminal end position.

When the movable member 44 is turned toward the first turn terminal end position from the first turn starting end position, the protrusions 41a, 41b are moved in such a manner as to be escaped from the recesses 44c, 44d in accordance with the turning motion of the movable member 44. When the movable member 44 is turned by a predetermined angle from the first turn starting end position, the protrusions 41a, 41b are completely escaped from the recesses 44c, 44d and abutted with the opposing surface of the movable member 44 to the attachment plate 41. As a result, the movable member 44 is moved by a predetermined distance against the biasing force of the coiled spring 45 in such a manner as to be away from the attachment plate 41. Contrarily, when the movable member 44 is turned to the first turn starting end position from a position which is a predetermined angle away from the first turn starting end position, the protrusions 41a, 41b abutted with the opposing surface of the movable member 44 are brought into the recesses 44d, 44c. As a result, the movable member 44 is moved toward the attachment plate 41 by a predetermined distance by the biasing force of the coiled spring 45. The angle for the movable member 44 to turn about the support cylinder 42 during the time the protrusions 41a, 41b are brought into and out of the recesses 44c, 44d is set to be same as the turning angle (10 degrees) for the reception section 3 to turn between the folding position and the first displacing position about the first turning axis L1. The distance for the movable member 44 to move toward and away from the attachment plate 41 caused by the protrusions 41a, 41b being brought into and out of the recesses 44c, 44d is set to a distance necessary for turning the reception section 3 to the first releasing position from the folding position.

When the movable member 44 is turned between the first turn terminal end position and a position which is away by a predetermined distance toward the first turn terminal end position from the first turn terminal end position, the protrusions 41a, 41b are brought into and out of the recesses 44d, 44c, respectively. Accordingly, in this case too, the movable member 44 is moved toward and away from the attachment plate 41 in accordance with its turn. The angle for the movable member 44 to turn about the support cylinder 42 during the time the protrusions 41a, 41b are brought into and out of the recesses 44d, 44c is the same as the angle for the movable member 44 to turn about the support cylinder 42 during the time the protrusions 41a, 41b are brought into and out of the recesses 44c, 44d, because the protrusions 41a, 41b have the same dimension and the same configuration with each other and the recesses 44c, 44d have the same dimension and the same configuration with each other, and set to be the same as the angle (10 degrees) for the reception section 3 to turn between the reverse folding position (first terminal end position) and the third displacing position about the first turning axis L1. Similarly, the distance for the movable member 44 to move toward and away from the attachment plate 41 by the protrusions 41a, 41b being brought into and out of the recesses 44d, 44c is the same as the distance for the movable member 44 toward and away from the attachment plate 41 by the protrusions 41a, 41b being brought into and out of the recesses 44c, 44d, and set to the distance necessary for turning the reception section 3 to the third releasing position from the reverse folding position.

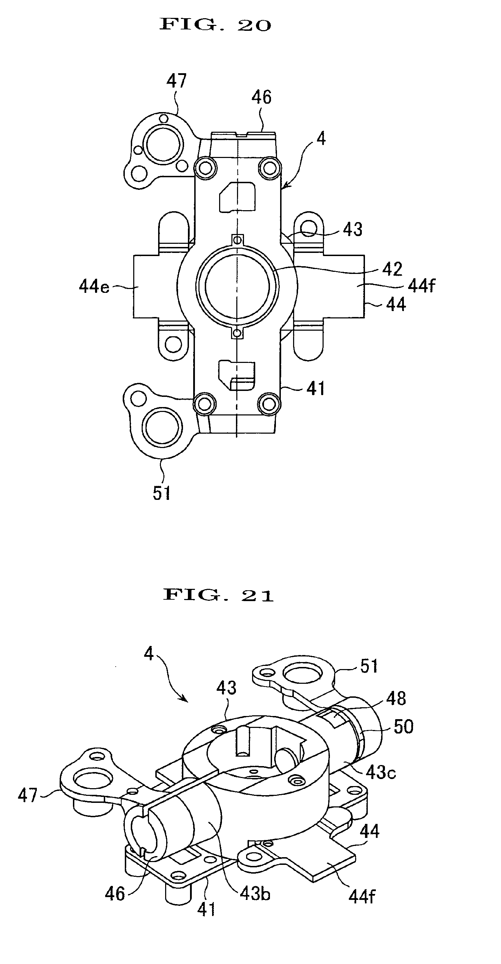

A pair of protruding cylindrical parts 43b, 43c are disposed at the other end (the end on the other side to the attachment plate 41, that is, the end on the upper side in FIG. 22) of the outer peripheral surface of the turning member 43. The pair of protruding cylindrical parts 43b, 43c are arranged in such a manner as to be 180 degrees away from each other in the peripheral direction of the turning member 43 and 90 degrees away from the guide groove 43a. Moreover, the protruding cylindrical parts 43b, 43c are arranged such that their axes (the second turning axis L2) are aligned with each other and orthogonal to the axis of the support cylinder 42. As shown in FIG. 21, the interior of the protruding cylindrical part 43b (the protruding cylindrical part on the right side in FIG. 22) is passed through the peripheral wall of the turning member 43 and open to the inner peripheral surface of the turning member 43. The interior of the other protruding cylindrical part 43c is shut off in communication with the interior of the turning member 43 by the peripheral wall of the turning member 43.

One end of a connecting cylinder 46 is non-turnably fitted to the inner peripheral surface of the protruding cylindrical part 43b. A locking claw (not shown) is formed on the outer peripheral surface of one end of the connecting cylinder 46. This locking claw is engaged with a basal end of the protruding cylindrical part 43b, thereby the connecting cylinder 46 is prevented from escaping by the protruding cylindrical part 43b. One end of a first connecting arm (second turning member) 47 is turnably fitted to the outer periphery of the other end protruding outside from the supporting cylindrical part 43b of the connecting cylinder 46. Accordingly, the first connecting arm 47 is turnably connected to the turning member 43 about the axis of the protruding cylindrical parts 43b. The reception section 3, as later described, is attached to the other end of the first connecting arm 47.

A movable plate 48 having a disc-like configuration is fitted to a distal end of the inner peripheral surface of the other protruding cylindrical part 43c such that the movable plate 48 is non-turnable but movable in the axial direction of the protruding cylindrical part 43c. A hinge shaft 49, whose axis is aligned with that of the protruding cylindrical part 43c, is arranged within the protruding cylindrical part 43c. A basal end of this hinge shaft 49 is turnably passed through the peripheral wall of the turning member 43 and a distal end of the hinge shaft 49 is turnably passed through a central part of the movable plate 48. Owing to this arrangement, the hinge shaft 49 is turnably supported by the protruding cylindrical part 43c such that the axis of the hinge shaft 49 is aligned with that of the protruding cylindrical part 43c. A turning plate 50 is turnably fitted to the outer peripheral surface of the distal end of the hinge shaft 49 passing through the movable plate 48, and one end of a second connecting arm (second turning member) 51 is non-turnably fitted to the distal end of the hinge shaft 49 at the area on the more tip side of the hinge shaft 49 than the movable plate 48. Accordingly, the second connecting arm 51 is turnably connected to the turning member 43 through the hinge shaft 49. The turning plate 50 is non-turnably connected to the second connecting arm 51. Accordingly, the turning plate 50 and the second connecting arm 51 may be integrally formed with each other. The second connecting arm 51 is connected to the turning member 43 through the hinge shaft 49 such that the second connecting arm 51 is non-movable radially outward of the turning member 43. The reception section 3 is attached to the other end of the second connecting arm 51. A coiled spring 52 is disposed between the inner peripheral surface of the protruding cylindrical part 43c and the outer peripheral surface of the hinge shaft 49. This coiled spring 52 biases the movable plate 48 toward the turning plate 50.

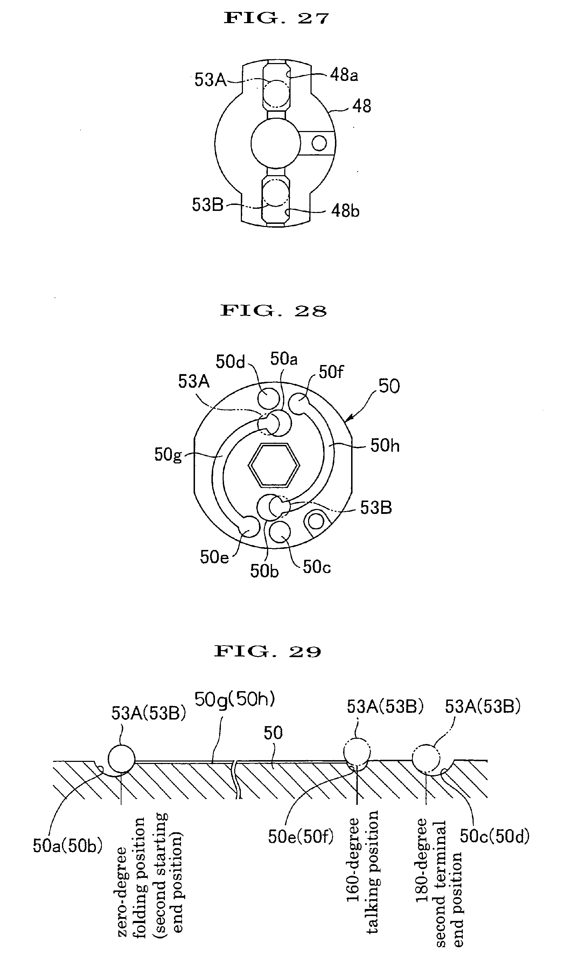

As shown in FIGS. 22 and 27, a pair of receiving recesses 48a, 48b are formed in the opposing surface of the movable plate 48 to the turning plate 50. The pair of receiving recesses 48a, 48b are extended in the radial direction of the movable plate 48 and symmetrically arranged with respect to the axis of the protruding cylindrical part 43c. That is, the pair of receiving recesses 48a, 48b are arranged 180 degrees away from each other in the peripheral direction on a circumference about the axis of the protruding cylindrical part 43c. Spherical bodies 53A, 53B are received in the receiving recesses 48a, 48b, respectively. The spherical bodies 53A, 53B are received in the receiving recesses 48a, 48b such that the spherical bodies 53A, 53B are partly protruded toward the turning plate 50 from the receiving recesses 48a, 48b and movable in the longitudinal direction (radial direction of the movable plate 48) of the receiving recesses 48a, 48b.

As shown in FIGS. 28 and 29, a pair of first recesses 50a, 50b, a pair of second recesses 50c, 50d and a pair of third recesses 50e, 50f are formed in the opposing surface of the turning plate 50 to the movable plate 48. The first recesses 50a, 50b are symmetrically arranged with respect to the axis of the protruding cylindrical part 43c. That is, the first recesses 50a, 50b are arranged 180 degrees away from each other in the peripheral direction on a circumference about the axis of the protruding cylindrical part 43c. The second recesses 50c, 50d and the third recesses 50e, 50f are also arranged in the same manner. It should be noted, however, that the second recesses 50c, 50d are arranged outside the first recesses 50a, 50b in the radial direction of the turning plate 50, and the third recesses 50e, 50f are arranged on a circumference having a diameter generally equal to that of the second recesses 50c, 50d. Moreover, the respective recesses 50a through 50f are arranged in such a manner as to have the following relation with the spherical bodies 53A, 54B.

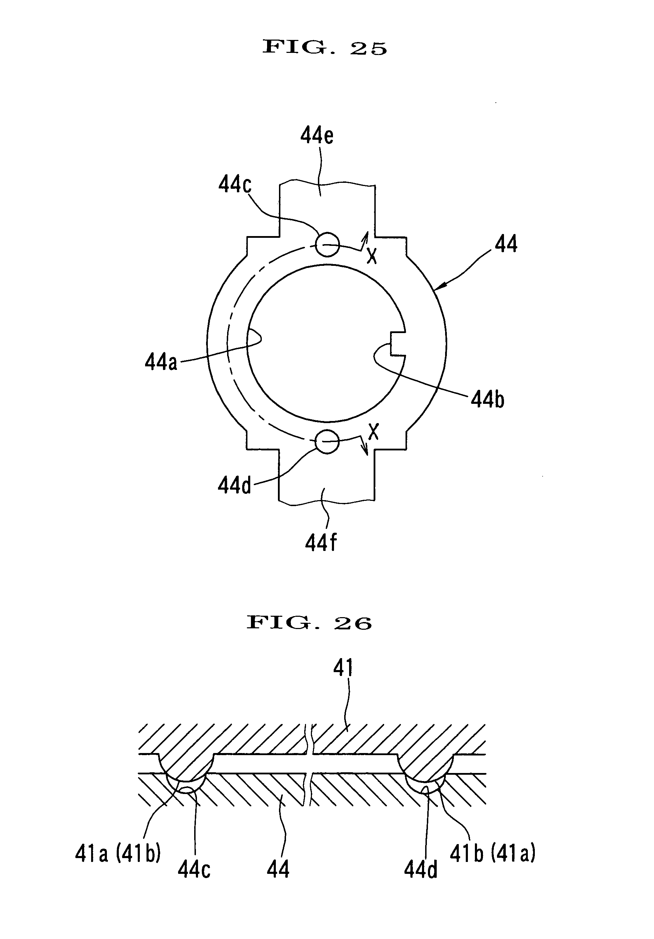

As shown in FIG. 28, it is assumed that the spherical bodies 53A, 53B are positioned in such a manner as to contact the inclined one ends of the bottom surfaces of the first recesses 50a, 50b in the peripheral direction of the turning plate 50. The position of the turning plate 50 and the second connecting arm 51 is hereinafter referred to as the second turn starting end position. When the turning plate 50 and the second connecting arm 51 are turned by a predetermined angle (15 degrees) in one direction (clockwise direction in FIG. 25) from the second turn staring end position, the spherical bodies 53A, 53B are escaped from the first recesses 50a, 50b, respectively. When the turning plate 50 is turned by 160 degrees from the second turn starting end position, the spherical bodies 53A, 53B are brought into the third recesses 50e, 50f, respectively. The position of the turning plate 50 and the second connecting arm 51 at that time is hereinafter referred to as the clicking position. The first recesses 50a, 50b and the third recesses 50e, 50f are away from each other in the radial direction of the turning plate 50. However, since a spiral guide groove 50g for connecting the first recess 50a and the third recess 50e is formed between the first recess 50a and the third recess 50e and a spiral guide groove 50h for connecting the first recess 50b and the third recess 50f is formed between the first recess 50b and the third recess 50f, the spherical bodies 50A, 50B can be rolled within the guide grooves 50g, 50h in the longitudinal direction and brought into the third recesses 50e, 50f, respectively in accordance with the turning motion in one direction of the turning plate 50. When the turning plate 50 and the second connecting arm 51 are turned by 180 degrees in one direction from the second turn starting end position, the spherical bodies 50A, 50B are brought into the second recesses 50c, 50d and positioned in such a manner as to contact the inclined one end (one end on the backward side in the turning direction in one direction of the turning plate 50 and the second connecting arm 51) of the bottom surfaces of the second recesses 50c, 50d. The position of the turning plate 50 and the second connecting arm 51 at that time is hereinafter referred to as the second turn terminal end position.

Since the movable plate 48 is biased toward the turning plate 50 by the coiled spring 52, the biasing force of the coiled spring 52 is converted to a turn biasing force for turning the turning plate 50 and the second connecting arm 51 in the other direction when the turning plate 50 and the second connecting arm 51 are located at the second turn starting end position and the spherical bodies 53A, 53B are in abutment with the inclined one ends of the bottom surfaces of the first recesses 50a, 50b. When the turning plate 50 and the second connecting plate 51 are located at the clicking position and the spherical bodies 53A, 53B are fitted in the third recesses 50e, 50f, the turning plate 50 and the second connecting plate 51 are stopped at the clicking position by a predetermined biasing force of the coiled spring 53. When the turning plate 50 and the second connecting plate 51 are located at the second turn terminal end position and the spherical bodies 53A, 53B are in abutment with the inclined other ends of the bottom surfaces of the second recesses 50c, 50d, the biasing force of the coiled spring 53 is converted to a turn biasing force for turning the turning plate 50 and the second connecting arm 51 in one direction.

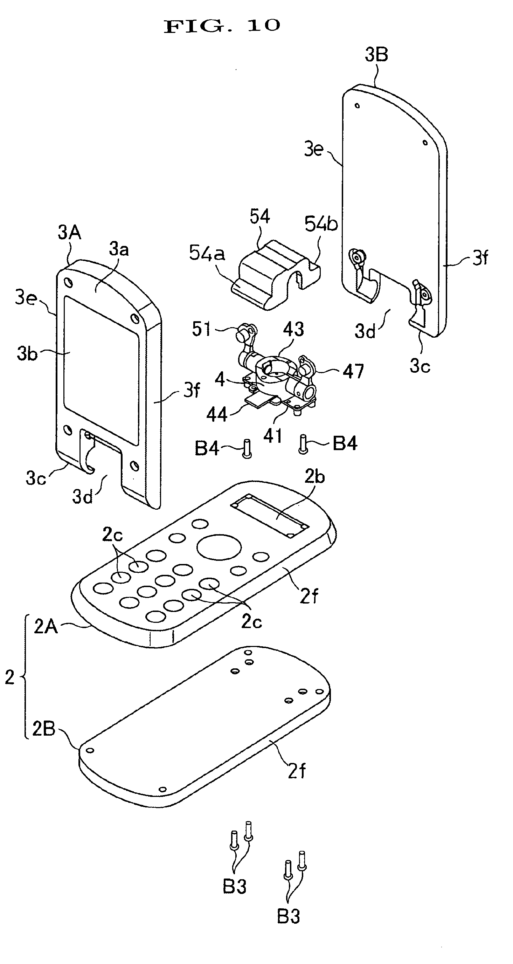

As shown in FIG. 9, the hinge device 4 is covered with a cosmetic cover 54. Owing to this arrangement, the part of the reception section 3 entered in the receiving recess 3d cannot be visually recognized from outside. The cosmetic cover 54 is arranged in such a manner as to be astride the turning member 43. The cosmetic cover 54 is movable in the axial direction of the support cylinder 42 with respect to the turning member 43. One and the other ends of the cover 54 astride the turning member 43 are fixed to one and the other ends 44e, 44f of the movable member 44 by machine screws B4 (see FIG. 10), respectively. Accordingly, the cosmetic cover 54 behaves in unison with the movable member 44. That is, the cosmetic cover 54 is moved in the axial direction of the support cylinder 42 in unison with the movable member 44 and turned about the axis of the support cylinder 42 in unison with the movable member 44.

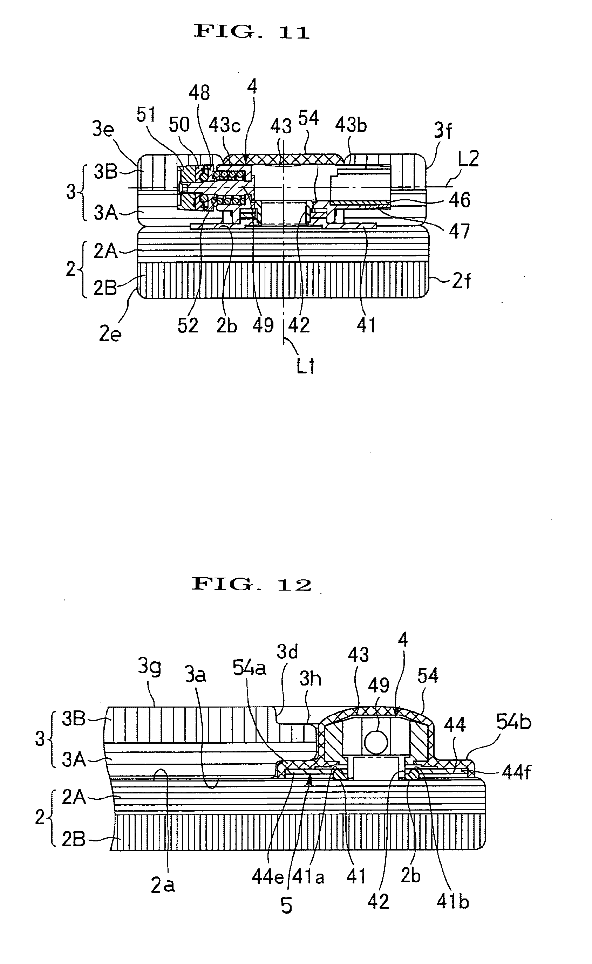

As shown in FIG. 12, when the reception section 3 is located at the folding position, one end 54a of the cosmetic cover 54 located at the other end side (left side in FIG. 12) of the transmission section 2 is generally in contact with the surface (lower side surface in FIG. 12) directing toward the transmission section 2 of an engaging protrusion 3h which is formed on the bottom surface of the receiving recess 3d of the reception section 3. Accordingly, when the movable member 44 is moved in a direction (upward in FIG. 12) away from the transmission section 2 (attachment plate 41) along the first turning axis L1, one end part 44e of the movable member 44 pushes the engaging protrusion 3h in the same direction through the one end part 54a of the cosmetic cover 54. As a result, the reception section 3 is turned in a direction (clockwise direction in FIG. 12) toward the second terminal end position from the second starting end position about the second turning axis L2. The one end 44e of the movable member 44 may be directly contacted with the engaging protrusion 3h without through the one end 54a of the cosmetic cover 54.

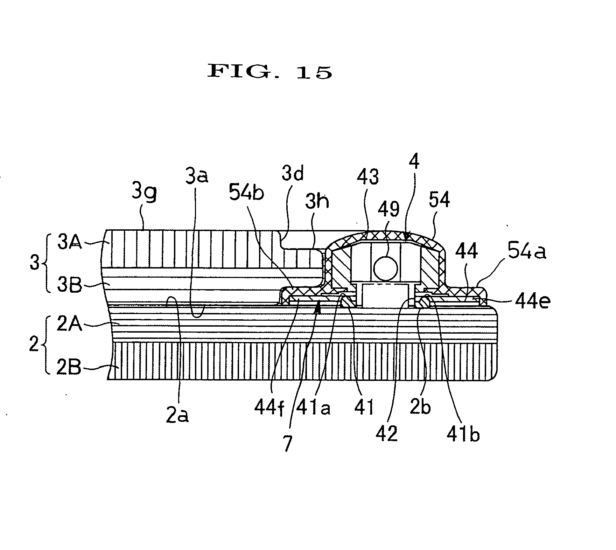

As shown in FIG. 15, when the reception section 3 is located at the reverse folding position, the other end (the end which is located on the left side in FIG. 15) 54b is generally in contact with the surface directing toward the transmission section 2 of the engaging protrusion 3h. Accordingly, when the movable member 44 is moved in a direction away from the transmission section 2 along the first turning axis L1, the other end 44f of the movable member 44 pushes the engaging protrusion 3h in the same direction through the other end 54b of the cosmetic cover 54. As a result, the reception section 3 is turned in a direction toward the second starting end position from the reverse folding position (second terminal end position) about the second turning axis L2. In this case too, the other end 44f of the movable member 44 may be directly contacted with the engaging protrusion 3h.

The hinge device 4 thus constructed is attached to the first and the reception section2, 3 in the following manner. As shown in FIG. 11, the attachment plate 41 is inserted in the attachment recess 2b of the transmission section 2 and fixed thereto by machine screws B3 (see FIG. 10). In that condition, the axis of the support cylinder 42 of the hinge device 4 is aligned with the first turning axis L1 and the axes of the protruding cylinders 43b, 43c are aligned with the second turning axis L2. Moreover, with respect to the first turning axis L1, the first turn starting end position and the first turn terminal end position of the turning member 43 and the movable member 44 are same as the first starting end position and the first terminal end position of the reception section 3, respectively, and with respect to the second turning axis L2, the second turn starting end position, the clicking position and the second turn terminal end position of the second connecting arm 51 are same as the second starting end position, the talking position and the second terminal end position of the reception section 3, respectively.

In the mobile telephone set 1 having the transmission section 2 and the reception section 3 connected to each other through the hinge device 4, when the reception section 3 is located at the first starting end position, the first terminal end position and the talking position, the reception section 3 is fixed (stopped) to the transmission section 2 in the respective positions with a clicking feel. When the reception section 3 is located between the second starting end position and the position away by a predetermined angle (15 degrees) toward the second terminal end position from the second starting end position, the reception section 3 is turned to the second starting end position about the second turning axis L2 and then held in the second starting end position. Similarly, when the reception section 3 is located between the second terminal end position and the position away by a predetermined angle (15 degrees) toward the second starting end position from the second terminal end position, the reception section 3 is turned to the second terminal end position about the second turning axis L2 and then, held in the second terminal end position.

When the reception section 3 located at the folding position is turned to the first displacing position from the first starting end position, the protrusions 41a, 41b of the attachment plate 41 are escaped from the recesses 44c, 44d of the movable member 44, respectively and contacted with the opposing surface of the movable member 44 to the attachment plate 41. As a result, the movable member 44 and the cosmetic cover 54 are moved away from the attachment plate 41 against the biasing force of the coiled spring 45. Then, one end 54a of the cosmetic cover 54 pushes the engaging protrusion 3h of the reception section 3. By this, the reception section 3 is turned to the first releasing position from the second starting end position about the second turning axis L2. In association therewith, the front surface 3a of the reception section 3 is brought away from the front surface 2a of the transmission section 2. When the reception section 3 is turned to the first starting end position from the first displacing position, the protrusions 41a, 41b are fitted into the recesses 44c, 44d, respectively, and therefore, the movable member 44 and the cosmetic cover 54 are moved toward the attachment plate 41 by the coiled spring 45. As a result, the reception section 3 becomes movable to the second starting end position from the releasing position about the second turning axis L2 and is turned to the second starting end position by the turn biasing force based on the biasing force of the coiled spring 52. As discussed, when the reception section 3 is turned between the first starting end position and the first displacing position about the first turning axis L1, the front surface 3a of the reception section 3 is moved along the first turning axis L1 and therefore, never contacted with the control buttons 2c disposed at the front surface 2a of the transmission section 2. Thus, the mobile telephone set 1 can be prevented from accidental operation. As apparent from the foregoing description, in this embodiment, the first turn displacing mechanism 5 is constituted by the protrusions 41a, 41b of the attachment plate 41, the recesses 44c, 44d of the movable member 44, one end (first abutment part) 44e of the movable member 44, the coiled spring 45, one end 54a of the cosmetic cover 54, the converting mechanism for converting the biasing force of the coiled spring 52 to the turn biasing force, and the engaging protrusion 3h of the reception section 3, and the moving mechanism 6 is constituted by the coiled spring 45, the protrusions 41a, 41b and the recesses 44c, 44d.

When the reception section 3 is turned between the first displacing position and the second displacing position about the first turning axis L1, the protrusions 41a, 41b are slid on the opposing surface of the movable member 44 to the attachment plate 41. At that time, since the opposing surface is in the form of a plane orthogonal to the first turning axis L1, the reception section 3 is not turned about the second turning axis L2 as the reception section 3 is turned about the first turning axis L1. Instead, the reception section 3 is held in the first releasing position (second releasing position). When the reception section 3 is turned between the second displacing position and the first terminal end position about the first turning axis L1, the reception section 3 is turned between the second starting end position and the second releasing position about the second turning axis L2 by the first turn displacing mechanism 5.

When the reception section 3 located at the reverse folding position is turned to the third displacing position from the first terminal end position about the first turning axis L1, the protrusions 41a, 41b of the attachment plate 41 are escaped from the recesses 44d, 44c of the movable member 44, respectively and contacted with the opposing surface of the movable member 44 to the attachment plate 41. As a result, the movable member 44 and the cosmetic cover 54 are moved away from the attachment plate 41 against the biasing force of the coiled spring 45. Then, the other end 54b of the cosmetic cover 54 pushes the engaging protrusion 3h of the reception section 3. By this, the reception section 3 is turned to the third releasing position from the second terminal end position about the second turning axis L2. In association therewith, the back surface 3g of the reception section 3 is brought away from the front surface 2a of the transmission section 2. When the reception section 3 is turned to the first terminal end position from the third displacing position, the protrusions 41a, 41b are fitted into the recesses 44d, 44c, respectively and therefore, the movable member 44 and the cosmetic cover 54 are moved toward the attachment plate 41 by the coiled spring 45. As a result, the reception section 3 becomes movable to the second terminal end position from the third releasing position about the second turning axis L2 and is turned to the second starting end position by the turn biasing force based on the biasing force of the coiled spring 52. As discussed, when the reception section 3 is turned between the first terminal end position and the third displacing position about the first turning axis L1, the back surface 3g of the reception section 3 is moved along the first turning axis L1 and therefore, never contacted with the control buttons 2c disposed at the front surface 2a of the transmission section 2. Thus, the mobile telephone set 1 can be prevented from accidental operation. As apparent from the foregoing description, in this embodiment, the second turn displacing mechanism 7 is constituted by the protrusions 41a, 41b of the attachment plate 41, the recesses 44d, 44c of the movable member 44, the other end (first abutment part) 44f of the movable member 44, the coiled spring 45, the other end 54b of the cosmetic cover 54, the converting mechanism for converting the biasing force of the coiled spring 52 to a turn biasing force, and the engaging protrusion 3h of the reception section 3, and the second moving mechanism 8 is constituted by the coiled spring 45, the protrusions 41a, 41b and the recesses 44d, 44c.

When the reception section 3 is turned between the third displacing position and the fourth displacing position about the first turning axis L1, the reception section 3 is held in the third releasing position (fourth releasing position) by the second turn displacing mechanism 7, and when the reception section 3 is turned between the fourth displacing position and the first starting end position about the first turning axis L1, the reception section 3 is turned between the second terminal end position and the fourth releasing position about the second turning axis L2 by the second turn displacing mechanism 7.

It should be noted, however, that the present invention is not limited to the above-mentioned embodiment but many changes and modifications can be made without departing from the gist of the invention.
For example, the present invention can also be applied to mobile equipments other than the above-mentioned mobile telephone set, for example, notebook type personal computers.
In the above-mentioned embodiments, the protrusions 41a, 41b are disposed at the attachment plate 41 and the recesses 44c, 44d are disposed at the movable member 44. However, it is also accepted that the recesses are disposed at the attachment plate 41 and the protrusions are disposed at the movable member 44.

### INDUSTRIAL APPLICABILITY

A biaxial hinge device according to the present invention can be used as a hinge device for turnably connecting a transmission section and a reception section of a mobile telephone set and a main body and a display part of a personal computer.

## Claims

1. A biaxial hinge device comprising a hinge main body, a first turning member turnably disposed at said hinge main body about a first turning axis, and a second turning member turnably disposed at said first turning member about a second turning axis which forms a right angle between said first turning axis and itself,
**CHARACTERIZED in that** a movable member is connected to said first turning member such that said movable member is non-turnable but movable in a direction of said first turning axis, and a moving mechanism is disposed between said movable member and said hinge main body such that when said first turning member is turned about said first turning axis in a direction away from a predetermined reference position, said movable member is moved away from said hinge main body along said first turning axis and when said first turning member is turned about said first turning axis toward said reference position, said movable member is moved toward said hinge main body along said first turning axis.

2. A biaxial hinge device according to claim 1, wherein said moving mechanism includes a biasing means for biasing said movable member toward said hinge main body along said first turning axis, a recess disposed at one of the opposing surfaces of said hinge main body and said movable member and a protrusion disposed at the other opposing surface and brought into and out of said recess in accordance with turning motion of said first turning member, said protrusion is brought out of said recess as said first turning member is turned away from said reference position, thereby said movable member is moved away from said hinge main body against biasing force of said biasing means and said protrusion is brought into said recess as said first turning member is turned toward said reference position, thereby said movable member is moved toward said hinge main body by the biasing force of said biasing means.

3. A biaxial hinge device according to claim 2, wherein two each of said recesses and said protrusions are provided, said two recesses are arranged on a circumference about said first turning axis in such a manner as to be 180 degrees away from each other in a peripheral direction, and two protrusions are arranged on a circumference about said first turning axis in such a manner as to be 180 degrees away from each other in a peripheral direction.
